# FASCICULE DE BREVET EUROPEEN

(11) **EP 2 960 610 B1**
(45) Date de publication et mention de la délivrance du brevet: **10.05.2017**
(21) Numéro de dépôt: 15172232.9
(22) Date de dépôt: 16.06.2015
(51) Int. Cl.: C09K 5/08, B23P 15/26, C09K 5/00, F28D 20/02, F28D 20/00

(54) **PROCÉDÉ DE RÉALISATION D'UN DISPOSITIF DE STOCKAGE D'ÉNERGIE THERMIQUE PAR MATÉRIAU À CHANGEMENT DE PHASE SOLIDE/SOLIDE**
VERFAHREN ZUR HERSTELLUNG EINER VORRICHTUNG ZUR SPEICHERUNG VON WÄRMEENERGIE ANHAND EINES FEST/FEST-PHASENÜBERGANGSMATERIALS
METHOD OF PRODUCING A THERMAL ENERGY STORAGE DEVICE FROM A SOLID/SOLID PHASE CHANGE MATERIAL

(30) Priorité: 18.06.2014 FR 1455581
(43) Date de publication de la demande: 30.12.2015
(73) Titulaire: COMMISSARIAT À L'ÉNERGIE ATOMIQUE ET AUX ÉNERGIES ALTERNATIVES, 75015 Paris (FR)
(72) Inventeur: MINVIELLE, Zoé, 38000 GRENOBLE (FR); COUTURIER, Raphaël, 38360 SASSENAGE (FR)
(74) Mandataire: Brizio Delaporte, Allison

(56) Documents cités:
- DE-U1-202007 013 140
- JP-A- 2002 162 183

## Description

### DOMAINE TECHNIQUE

La présente invention concerne un procédé de réalisation d'un dispositif de stockage d'énergie thermique par Matériau à Changement de Phase solide/solide (MCP s/s) selon le préambule de la revendication 1. JP 2002 162183 A divulgue un tel procédé.

L'invention trouvera son application dans le domaine du stockage de l'énergie thermique. Elle trouvera par exemple pour application le stockage de chaleur sur un réseau de chaleur urbain ou industriel.

### ETAT DE LA TECHNIQUE

Le stockage de l'énergie thermique qui consiste à placer une quantité d'énergie en un lieu donné pour permettre son utilisation ultérieure est une problématique de tout temps. La maîtrise du stockage de l'énergie est d'autant plus importante de nos jours pour valoriser les énergies alternatives, qui sont intermittentes. Il est donc nécessaire de stocker cette énergie pour une utilisation ultérieure.

Les Matériaux à Changement de Phase (MCP) se sont développés et sont couramment utilisés dans des bâtiments pour accumuler de l'énergie solaire thermique de chauffe-eau solaires individuels. Les MCP permettent également de lisser la production d'énergie fournie par les énergies alternatives et d'augmenter la capacité de stockage grâce à leur grande densité énergétique volumique.

Grâce aux MCP, la chaleur est absorbée ou restituée au cours d'un changement d'état. Il existe quatre types de transformations de MCP : gaz/liquide, gaz/solide, solide/solide et liquide/solide. Pour le stockage d'énergie pour des bâtiments, ce sont des transformations liquide/solide qui sont couramment utilisées. Elles ont des enthalpies de changement de phase élevées et des expansions volumiques réduites lors de la fusion. Par exemple pour les MCP liquide/solide, le matériau emmagasine la chaleur lorsqu'il passe de l'état solide à l'état liquide, puis il la restitue lorsqu'il passe de l'état liquide à l'état solide.

Les MCP à transition solide/solide commencent à se développer notamment dans la construction. Le fait qu'ils soient en permanence solides rend leur conditionnement et leur utilisation faciles. En outre, les matériaux à changement de phases solide/ solide permettent d'emmagasiner plus de chaleur que les matériaux à changements de phases solide/liquide.

L'invention permet ainsi de bénéficier de la forte densité énergétique des MCP s/s.

Néanmoins, il existe toujours le besoin d'améliorer les performances des MCP s/s et de permettre un stockage et une restitution de chaleur toujours plus importante.

### EXPOSE DE L'INVENTION

La présente invention propose à cet effet un procédé de réalisation d'un dispositif de stockage d'énergie thermique dans lequel au moins un MCP s/s est formé directement dans l'enceinte de stockage d'énergie. Ainsi, selon l'invention le procédé de formation d'au moins un MCP s/s est au moins partiellement réalisé dans l'enceinte de stockage d'énergie. Ladite enceinte de stockage contenant le MCP s/s formé est ensuite utilisée pour des cycles de stockage d'énergie thermique en stockant puis en restituant de la chaleur dans ledit MCP s/s. Selon le présent procédé, l'enceinte de stockage d'énergie fait office de réacteur pour la formation d'au moins un MCP s/s. De ce fait la manutention du MCP s/s est limitée puisqu'il est formé dans l'enceinte qui sera l'enceinte de stockage. La fabrication du dispositif de stockage est facilitée.

Préférentiellement, au moins une étape de cristallisation du MCP s/s est réalisée dans l'enceinte de sorte que l'assemblage de l'enceinte et du dispositif soit optimal.

En effet, l'introduction d'un liquide dans l'enceinte puis son passage à l'état solide par cristallisation permet un remplissage total de sorte que le taux de vide de l'enceinte est le plus limité possible.

Le procédé selon l'invention présente également l'avantage d'obtenir un dispositif de stockage ayant des capacités de stockage plus performantes que les dispositifs de l'état de la technique. En effet, suivant le présent procédé, le MCP s/s n'est pas chauffé au-delà de son point de fusion ce qui permet de conserver son intégrité chimique et donc ses performances, contrairement aux MCP s/s de l'état de la technique qui sont chauffés au-delà de leur point de fusion pour être liquéfiés.

Avantageusement, le dispositif comprend un échangeur thermique à fluide caloporteur agencé au moins partiellement dans ladite enceinte. L'échangeur thermique permet de contrôler la température à l'intérieure de l'enceinte lors de la formation du MCP s/s puis d'apporter et de récupérer la chaleur dans le MCP s/s.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : Schéma de réalisation d'un dispositif selon l'invention avec le pentaérythritol comme MCP s/s.
Figure 2 : Schéma d'un dispositif de stockage d'énergie thermique comprenant un échangeur à tubes à ailettes.
Figure 3 : Schéma d'un dispositif de stockage d'énergie thermique comprenant un échangeur à serpentin.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention porte sur un procédé de réalisation d'un dispositif de stockage d'énergie thermique par au moins un matériau à changement de phase solide/solide comprenant une enceinte de stockage d'énergie thermique contenant le au moins un matériau à changement de phase solide/solide et un échangeur thermique, à fluide caloporteur pour stocker et extraire de la chaleur dudit MCP s/s, plongeant dans ladite enceinte caractérisé en ce qu'au moins une étape de formation d'au moins un matériau à changement de phase solide/solide est effectuée à l'intérieur de l'enceinte de stockage, la au moins une étape de formation comprend au moins une étape de cristallisation.

Avantageusement, suivant des variantes préférées mais non limitatives, l'invention est telle que :
- la au moins une étape de formation comprend une étape de concentration effectuée à l'intérieur de l'enceinte de stockage ;
- la au moins une étape de formation comprend une étape de filtration effectuée dans l'enceinte de stockage ;
- la au moins une étape de formation comprend une étape de mélange des réactifs effectuée dans l'enceinte de stockage ;
- on introduit des réactifs de la formation du au moins un matériau à changement de phase solide/solide dans l'enceinte par au moins un conduit d'alimentation ;
- on extrait des résidus liquides issus de la formation du au moins un matériau de l'enceinte par au moins un dispositif de soutirage ;
- l'échangeur thermique à fluide caloporteur est utilisé pour contrôler la température à l'intérieure de l'enceinte lors de la formation d'au moins un matériau à changement de phase solide/solide ;
- l'échangeur thermique est configuré pour contrôler la cristallisation du Matériau à Changement de Phase solide/solide à l'intérieur de l'enceinte ;
- le au moins un matériau à changement de phase solide/solide est solubilisé dans un solvant puis introduit dans l'enceinte de stockage puis au moins une étape de cristallisation du MCP s/s est effectuée à l'intérieur de l'enceinte ;
- une étape préalable de recouvrement des parois métalliques intérieures de l'enceinte par un matériau de revêtement est destinée à éviter le contact entre le au moins un MCP s/s et les parois métalliques de l'enceinte
- une étape de dopage du au moins un MCP s/s est effectuée dans l'enceinte par exemple pour améliorer la conductivité thermique et/ou limiter la surfusion ;
- le au moins un MCP s/s est le pentaérythritol.

Avantageusement, le procédé ne comporte pas d'étape de liquéfaction du MCP s/s par chauffage au-delà de son point de fusion.

Un autre objet de l'invention est un procédé de réalisation d'une installation de stockage d'énergie thermique sur un site d'exploitation caractérisé par le fait qu'il comprend :
- la réalisation d'un dispositif de stockage d'énergie thermique selon le procédé tel que décrit précédemment ;
- le transport sur le site d'exploitation du dispositif réalisé dont l'enceinte est remplie de MCP s/s ;
- le raccordement de l'échangeur du dispositif au réseau fluidique pour démarrer le stockage d'énergie thermique.

Un autre objet de l'invention est un dispositif de stockage d'énergie thermique réalisé par le procédé tel que décrit précédemment comprenant une enceinte de stockage d'énergie thermique contenant au moins un MCP s/s et un échangeur thermique à fluide caloporteur disposé au moins partiellement dans l'enceinte caractérisé par le fait qu'il comprend un dispositif de régulation de la température du fluide caloporteur de sorte à être configuré pour :
- dans une configuration de formation du au moins un MCP s/s, contrôler la température du fluide caloporteur afin de provoquer la cristallisation du MCP s/s ;
- dans une configuration d'utilisation, contrôler la température du fluide caloporteur afin d'amener et d'extraire de la chaleur du MCP s/s préalablement formé.

Un autre objet de l'invention est l'utilisation d'un dispositif de stockage d'énergie thermique réalisé par le procédé tel que décrit précédemment comprenant une enceinte de stockage d'énergie thermique contenant au moins un MCP s/s et un échangeur thermique à fluide caloporteur disposé au moins partiellement dans l'enceinte caractérisée par le fait qu'elle comprend une étape d'utilisation de l'échangeur pour contrôler la cristallisation du MCP s/s dans l'enceinte et une étape d'utilisation de l'échangeur pour apporter de la chaleur au MCP s/s déjà formé ou pour extraire de la chaleur du MCP s/s déjà formé.

Le procédé selon l'invention concerne la fabrication d'un dispositif de stockage d'énergie thermique. Le dispositif comprend une enceinte 1 de stockage destinée à contenir au moins un MCP s/s 2. L'enceinte 1 est classiquement d'une forme cylindrique dont les parois sont formées de matériau métallique résistant aux variations de pression et de température. A titre d'exemple, l'enceinte 1 est en acier de construction au carbone. Les nuances classiques pour une enceinte sous pression sont P235GH, P265GH, P355GH. En l'absence de pression, des aciers inoxydables 304, 316 peuvent être utilisés.

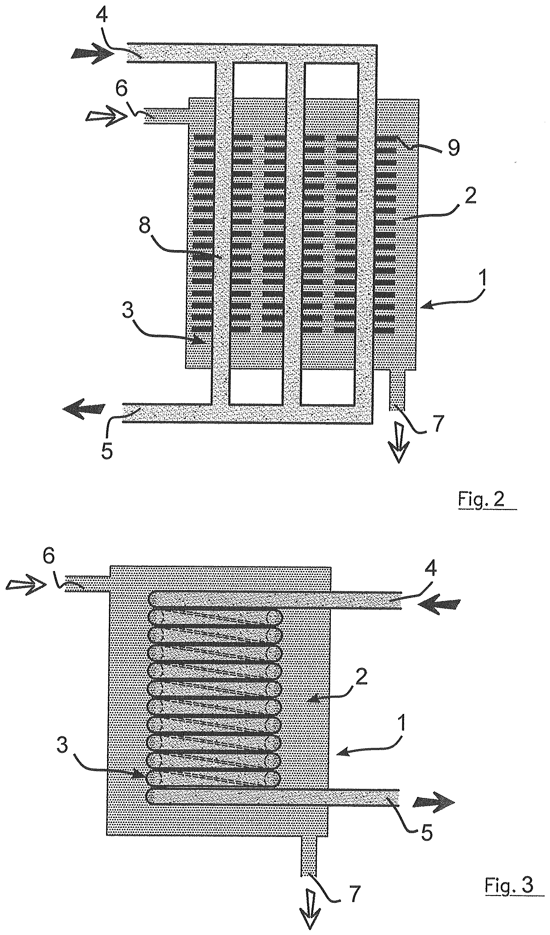

Le dispositif comprend un échangeur thermique 3 à fluide caloporteur. Cet échangeur 3 plonge dans l'enceinte 1 du dispositif. L'échangeur 3 comprend une entrée 4 et une sortie 5 du fluide caloporteur. L'entrée 4 et la sortie 5 sont agencées à l'extérieur de l'enceinte 1. L'entrée 4 et la sortie 5 peuvent être, selon les modes de réalisation, disposées à deux extrémités opposées de l'enceinte 1, par exemple l'entrée 4 en haut et la sortie 5 en bas, telle qu'illustré en figures 2 et 3 ou bien agencées d'un même côté par exemple en haut. Préférentiellement, l'échangeur 3 est au moins partiellement positionné dans l'enceinte 1, préférentiellement au centre. L'échangeur 3 peut être de différents types dont notamment avec des tubes à ailettes illustrés en figure 2, ce type d'échangeur 3 présente l'avantage d'améliorer les échanges par conduction et permet de travailler à haute pression ou avec un serpentin illustré en figure 3 qui présente l'avantage d'être moins onéreux ou bien avec des plaques.

Le fluide caloporteur est classiquement de l'eau mais tout autre fluide présentant des propriétés caloportrices peut être utilisé.

Le dispositif de stockage selon l'invention comprend avantageusement un dispositif de régulation de la température du fluide caloporteur de l"échangeur thermique 3. Le dispositif de régulation permet de contrôler la température du fluide caloporteur pour l'adapter à la formation du MCP s/s, notamment afin d'effectuer la cristallisation du MCP s/s. De plus, le dispositif de régulation permet également de contrôler la température du fluide caloporteur lors de l'utilisation du dispositif de stockage d'énergie pour apporter et extraire de la chaleur du MCP s/s 2 contenu dans l'enceinte 1.

Selon un mode de réalisation préféré, l'enceinte 1 comprend des parois intérieures classiquement métalliques. Les parois sont préférentiellement recouvertes d'un matériau de revêtement destiné à éviter le contact entre le au moins un MCP s/s et des parties métalliques. A titre d'exemple le matériau de revêtement est un polymère ou une résine, préférentiellement un matériau de type résine fluorée tel du PTFE, FEP ou PFA.

Cette disposition améliore les capacités de stockage du MCP s/s en limitant l'oxydation du MCP s/s lors des cycles de stockage au contact de l'oxygène et/ou du métal. Avantageusement, cette disposition peut également être utile pour éviter la corrosion de l'enceinte 1 par le MCP s/s 2 si celui-ci est corrosif.

L'enceinte 1 contient au moins un MCP s/s 2. Il peut être utilisé des mélanges de MCP s/s. Dans ce cas, au moins un MCP s/s du mélange est formé dans l'enceinte 1. Dans la suite de la description, la référence à un MCP s/s n'est pas limitative.

L'enceinte 1 contient le MCP s/s 2 à l'état solide qui entoure l'échangeur 3. L'échangeur 3 est noyé dans le MCP s/s 2. De cette manière, l'échangeur 3 récupère au mieux les variations de chaleur du MCP s/s.

Le MCP s/s est un matériau à deux phases solides dont le passage entre ces deux phases stocke ou libère de l'énergie. Préférentiellement, le MCP s/s est un matériau à deux phases solides à structure cristalline dont le passage d'une première structure cristalline à une deuxième structure cristalline va nécessiter de la chaleur qui est alors stockée dans le MCP s/s dans sa deuxième structure cristalline. A contrario, le passage de la deuxième structure cristalline à la première structure cristalline est exothermique et libère ladite chaleur stockée. Lorsque le dispositif de stockage d'énergie fonctionne pour stocker de l'énergie thermique, l'échangeur 3 apporte de la chaleur dans l'enceinte 1, il y a un échange de chaleur du fluide caloporteur vers le MCP s/s au travers de l'échangeur 3. Cette chaleur va permettre la transformation du MCP s/s de la première structure cristalline à la deuxième structure cristalline qui stockera alors la chaleur issue du fluide caloporteur. Lorsque le dispositif fonctionne pour restituer de l'énergie thermique, l'échangeur 3 refroidit le MCP s/s, il y a un échange de chaleur du MCP s/s vers le fluide caloporteur au travers de l'échangeur 3. Ceci qui permet le passage de la deuxième structure cristalline à la première structure cristalline. Cette transformation est exothermique. La chaleur libérée est récupéré par le fluide caloporteur.

Avantageusement, le changement de volume entre les deux phases du MCP s/s est de l'ordre de 5 à 10% maximum, ce qui est moins important que pour les MCP solide/liquide comme les paraffines dont la variation de volume est de l'ordre de 15%. De plus avec un MCP s/s le changement de volume se fait dans un milieu homogène contrairement aux MCP solide/liquide dans lequel une zone liquide doit trouver un chemin d'expansion au milieu d'un solide. Les contraintes et dont les efforts mécaniques générés, notamment sur l'enceinte 1 et l'échangeur 3, sont donc plus faibles avec un MCP s/s.

Avantageusement, dans le dispositif fabriqué selon l'invention, l'utilisation de MCP s/s supprime les mouvements de recirculation de liquide liés aux gradients thermiques générés par la fusion de MCP solide/liquide dans l'enceinte 1. Or, la présence de gradients de température dans l'enceinte 1 induit des mouvements de recirculation par convection naturelle du liquide, induisant des contraintes mécaniques sur les ailettes 9 des tubes 8 d'échangeur 3 et sur les parois de l'enceinte 1. Selon l'invention, la durée de vie du dispositif est allongée en limitant les risques d'endommagement.

Selon un mode de réalisation, le MCP s/s peut être dopé pour améliorer sa conductivité thermique, c'est-à-dire pour améliorer le transfert de chaleur au sein du MCP s/s. A titre d'exemple un dopage par un dispersoïde de fibres de carbone ou métalliques peut être utilisé. Une fraction de fibres de l'ordre de 5 à 10 % en masse du MCP s/s peut être ajoutée sans risque de décantation des particules de dopage.

Selon un autre mode de réalisation, des particules de graphite sont ajoutées au MCP s/s de sorte à permettre une nucléation plus efficace et ainsi limiter une surfusion. Avantageusement le sous-refroidissement est limité à 10°C. Le matériau peut être dopé avec une très faible quantité de poudre de graphite de l'ordre de 0,1% masse afin de créer des sites de germination des cristaux au changement de phase. La surfusion s'entend comme la différence entre la température de liquéfaction lors de la chauffe et celle de solidification au refroidissement. Selon une autre possibilité, un dopage par 3% en masse de nanoparticules de nitrure d'aluminium (AIN) peut être réalisé.

Le remplissage de l'enceinte 1 par le matériau MCP s/s 2 est une étape critique de ce type de dispositif. En effet, la difficulté réside dans l'optimisation du taux de vide de l'enceinte 1. Or, ce taux de vide est particulièrement élevé lors du remplissage de l'enceinte 1 par un MCP s/s à l'état solide. En effet classiquement, le MCP s/s est introduit dans l'enceinte 1 sous forme de poudre. Le taux de vide est de l'ordre de 25%. On entend par taux de vide la fraction volumique de l'enceinte 1 non occupée par le MCP s/s 2. Cette fraction peut être composée d'air et/ou d'un gaz neutre.

Selon l'état de la technique, pour placer un matériau MCP s/s dans une enceinte comprenant un échangeur thermique, le MCP s/s est classiquement liquéfié pour pouvoir être coulé dans l'enceinte. Pour être liquéfié, le MCP s/s est chauffé au-delà de sa température de fusion puis l'enceinte est remplie par le MCP s/s liquide.

Les inventeurs ont mis au point un nouveau procédé de fabrication de ce type de dispositif de stockage d'énergie thermique. Selon l'invention, le MCP s/s est formé dans l'enceinte 1 du dispositif. C'est-à-dire qu'il n'est plus nécessaire de synthétiser le MCP s/s 2 qui se trouve alors sous la forme d'un solide puis de le liquéfier par chauffage puis à nouveau de le resolidifier dans l'enceinte 1 par refroidissement.

Avantageusement, selon l'invention, au moins une étape de formation du MCP s/s 2 est réalisée dans l'enceinte 1.

On entend par étape de formation une étape de transformation chimique c'est-à-dire une étape de synthèse ou bien une étape de transformation physique c'est-à-dire une étape de changement de structure comme la cristallisation. Selon l'invention, la cristallisation s'entend comme la précipitation de cristaux dans une phase liquide.

La formation d'un MCP s/s 2 comprend avantageusement les étapes successives de mélange des réactifs 21, filtration 22 et de cristallisation 23.

Préférentiellement, le procédé selon l'invention comprend au moins une étape de cristallisation 23 réalisée dans l'enceinte 1. Plus préférentiellement, le procédé selon l'invention comprend au moins une étape de cristallisation 23 et au moins une étape préalable de filtration 22 réalisées dans l'enceinte 1. Encore plus préférentiellement, le procédé selon l'invention comprend au moins une étape de cristallisation 23, au moins une étape préalable de filtration 22 et au moins une étape de mélange des réactifs 21 réalisées dans l'enceinte 1.

Selon l'invention, les réactifs introduits dans l'enceinte 1 pour former le MCP s/s 2 dans l'enceinte 1 sont à l'état liquide ou tout au moins sous forme de solution. Avantageusement, les contacts entre les parois de l'enceinte 1 et le MCP s/s 2 sont optimaux et garantissent un taux de vide limitée, préférentiellement inférieur à 10% encore préférentiellement de l'ordre du pourcent.

Les inventeurs se sont aperçus que les capacités de stockage du dispositif de stockage par MCP s/s 2 sont augmentées grâce au procédé selon l'invention. Sans être liée à ce raisonnement, une explication serait que lorsque le MCP s/s 2 est chauffé au-delà de sa température de fusion, l'oxydation est augmentée entrainant une diminution de la réversibilité du MCP s/s 2 entre les deux phases solide/solide.

Avantageusement, le procédé selon l'invention présente également l'avantage de limiter les risques d'endommagement du revêtement des parois internes de l'enceinte 1. En effet, lors de l'introduction d'un MCP s/s 2 chauffé à l'état liquide dans l'enceinte 1, il est à une température supérieure à sa température de fusion et donc classiquement à une température plus élevée que la température maximales d'utilisation de la plupart des polymères et résines de revêtement. Ces derniers peuvent être endommagés, supprimant leur effet protecteur de l'oxydation.

Préférentiellement, l'enceinte 1 comporte au moins un conduit d'alimentation 6 pour introduire les réactifs pour la formation du MCP s/s 2. Le conduit d'alimentation 6 est avantageusement placé en partie haute de l'enceinte 1 telle qu'illustrée aux figures 2 et 3.

Avantageusement, l'enceinte 1 comporte un dispositif de soutirage 7 destiné à extraire les résidus issus de la formation du MCP s/s 2 dans l'enceinte 1. Le dispositif de soutirage 7 est préférentiellement agencé au point le plus bas de l'enceinte 1 telle que représentée en figures 2 et 3 de sorte à laisser s'écouler les résidus par gravité. Le dispositif de soutirage 7 comprend des moyens de purge et avantageusement des moyens de filtration. Les moyens de purge comprennent au moins un conduit de sortie de l'enceinte 1 associé à au moins une vanne de contrôle de l'ouverture du conduit. Les moyens de filtration sont avantageusement disposés à l'extérieur de l'enceinte 1 de sorte à pouvoir être retirés, nettoyés ou changés. Les moyens de filtration sont destinés à retenir les particules solides dans l'enceinte 1 et à permettre la purge des résidus liquides. A titre d'exemple, le moyen de filtration est un tamis avec une maille sélectionnée pour retenir les particules solides d'intérêt.

Selon le procédé de l'invention, l'échangeur 3 thermique est avantageusement utilisé comme moyen de contrôle de la température dans l'enceinte 1 lors de la formation du MCP s/s 2 et également comme moyen d'apport et de restitution de la chaleur dans le MCP s/s 2 lors de l'utilisation du dispositif pour le stockage d'énergie thermique.

Selon un premier mode de réalisation, les réactifs sont préférentiellement pré-mélangés avant leur introduction dans l'enceinte 1. Ce pré-mélange est par exemple réalisé par un mélangeur statique est inséré par piquage sur le conduit d'alimentation 6 des réactifs. Ceci est préféré dans le cas le plus courant où l'enceinte 1 ne possède pas de mélangeur interne. Ainsi, le pré-mélange est réalisé et la réaction chimique est réalisée dans l'enceinte 1 de sorte, comme décrit ci-après, que la température de la réaction soit contrôlée par l'échangeur 3.

Selon un deuxième mode de réalisation, les réactifs sont mélangés avant leur introduction dans l'enceinte 1. Dans ce cas les réactifs sont mélangés et réagissent en dehors de l'enceinte 1. Le produit de la réaction est introduit dans l'enceinte 1 où se déroule alors au moins une étape de cristallisation 23. Préférentiellement, il se déroule également au moins une étape de filtration 22 dans l'enceinte 1 également.

Selon un troisième mode de réalisation, le MCP s/s 2 est synthétisé en dehors de l'enceinte 1 préalablement au procédé selon l'invention. Le MCP s/s 2 à l'état solide est solubilisé. Cette solubilisation est réalisée en mélangeant le MCP s/s 2 avec un solvant adapté. Cette solubilisation diffère de la liquéfaction effectuée dans l'état de l'art dans laquelle le MCP s/s est chauffé au-delà de son point de fusion pour devenir liquide. Selon le présent mode de réalisation, le MCP s/s n'est pas liquéfié mais solubilisé. Il n'y a pas d'altération de la structure chimique du MCP s/s.

La solution obtenue est ensuite introduite dans l'enceinte 1. Ce déroule ensuite dans l'enceinte 1 au moins une étape de cristallisation 23.

Selon l'invention, la cristallisation 23 du MCP s/s 2 dans l'enceinte 1 s'entend comme une étape de cristallisation par évaporation, une étape de cristallisation par réfrigération et/ou une étape de recristallisation.

Le pentaérythritol (CAS 115-77-5) est un MCP s/s pouvant être utilisé dans le procédé selon l'invention. D'autres MCP s/s tels que trimethylol ethane [(CH3)-C-(CH2OH)3] ou neopentyl glycol ((CH3)2-C-(CH2OH)2) ou des mélanges peuvent êtres utilisés.

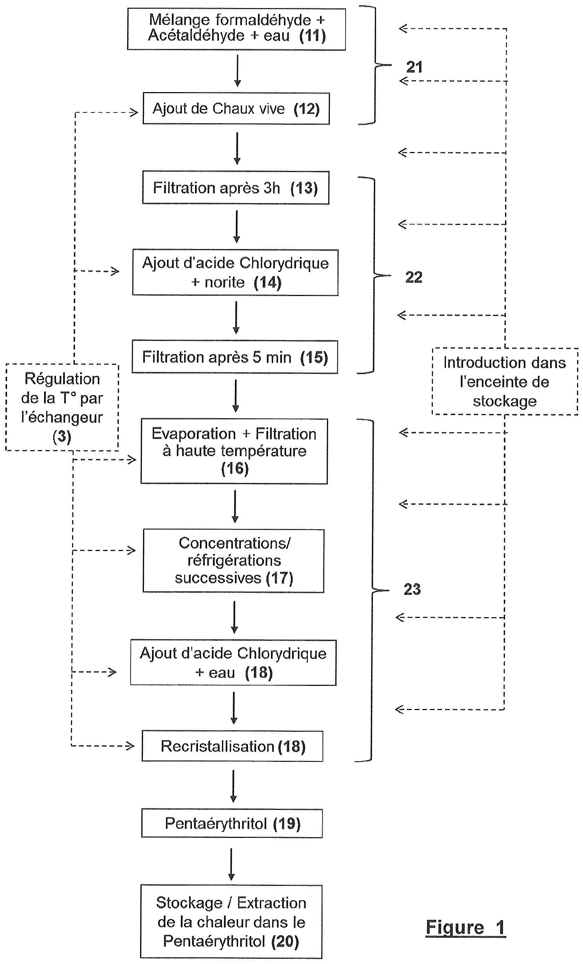

A titre d'exemple un flow chart résumant les étapes de formation du pentaérythritol est représenté en figure 1.

H2CO + CH3-COH + H20 + CaO → (CH2OH)3-C-COH + Ca(OH)2 (A)

(CH2OH)3-C-COH + H2CO → C-(CH2OH)4 + HCOOH (B)

La réaction (A) est une aldolization, c'est-à-dire une condensation d'aldéhyde par réaction entre le formaldéhyde (H2CO) et l'acétaldéhyde (CH3-COH) en présence d'un excès d'eau (H20). Le mélange de ces réactifs 11 est réalisé dans ou en dehors de l'enceinte 1 selon les modes de réalisation décrits ci-dessus.

Après la réaction et afin de retirer un maximum d'eau, de l'oxyde de calcium (CaO) est ajouté 12 pour réagir avec l'eau en excès et former de l'hydroxyde de calcium. Cette réaction fortement exothermique dégage de la chaleur qu'il faut pouvoir évacuer afin d'éviter une hausse trop importante de la température du milieu réactionnel. Selon une possibilité, l'oxyde de calcium est introduit petit à petit dans le réacteur pour éviter un dégagement trop important de chaleur. C'est ce que l'on appelle un réacteur semi-continu. Ce procédé de mise en oeuvre présente l'inconvénient d'allonger les temps opératoires caractéristiques. Selon une autre possibilité avantageuse et si le mélange des réactifs 21 est réalisé dans l'enceinte 1, la chaleur de réaction peut être évacuée par le fluide caloporteur de l'échangeur 3.

Des étapes de filtration 22 sont nécessaires pour séparer les produits de réaction et extraire le composé (CH2OH)3-C-COH.

La réaction (B) est une réaction de Cannizarro, c'est-à-dire qu'un aldéhyde réagit avec un aldéhyde s'ensuit des étapes de cristallisation 23 pour former un alcool.

Afin de concentrer et extraire les phases cristallisées et notamment le pentaérythritol des étapes de concentrations/réfrigérations 17 sont mises en oeuvre. La cristallisation a lieu autour de 5-10°C. Préférentiellement, une étape de recristallisation 19 est réalisée pour homogénéiser et purifier la structure du MCP s/s 2.

Avantageusement, au moins l'étape de recristallisation 19 est réalisée dans l'enceinte 1.

Encore plus avantageusement, au moins l'étape de concentration/réfrigération successive 17 est également réalisée dans l'enceinte 1.

Encore plus avantageusement, au moins une étape de filtration 13 ou 15 est également réalisée dans l'enceinte 1. Encore plus avantageusement, au moins une étape de mélange des réactifs 11 ou 12 est réalisée dans l'enceinte 1.

Un procédé de fabrication d'un dispositif de stockage d'énergie selon l'invention peut être mis en place pour le stockage de chaleur sur un réseau de chaleur urbain ou industriel. Des enceintes 1 de dispositif de stockage peuvent être installées pour accumuler de la chaleur et répondre au pic de demande du matin et soir sur des réseaux de chaleur fournissant eau chaude pour le chauffage ou pour l'eau chaude sanitaire. Suivant le niveau de température de transition du MCP s/s, le dispositif de stockage d'énergie thermique est agencé soit sur la boucle principale de la chaudière à haute température et haute pression, par exemple eau surchauffée à 160°C sous 20 bars de pression, soit sur les boucles secondaires alimentant les habitations par exemple à une température de 60-80°C et sous pression de 1 bar.

Dans ce cas, des enceintes de taille de l'ordre de 10m³ sont disposées dans les sous-stations où s'échange la chaleur entre boucle principale et boucle secondaire.

Selon l'invention, un dispositif de stockage d'énergie thermique selon l'invention avec un MCP s/s tel que le pentaérythritol permet de stocker entre 60 et 100kWh/m³ d'enceinte. A titre d'information, une enceinte avec un échangeur intégré comprenant un MCP solide/liquide tel que les acides stéariques ou sébaciques permet de stocker de 40 à 50kWh/m³ d'enceinte.

Le procédé de fabrication selon l'invention permet une augmentation de la quantité d'énergie stockée par unité de volume, ou, pour une quantité de chaleur donnée, diminution du volume de l'enceinte.

Suivant un mode de réalisation, le remplissage de l'enceinte 1 et les étapes de formation du MCP s/s sont préférentiellement réalisés en usine. Une fois le MCP s/s cristallisé dans l'enceinte 1, celle-ci est transportée dans le lieu de stockage d'énergie, par exemple dans les sous-stations d'un réseau de chaleur. L'échangeur 3 est ensuite relié au réseau fluidique pour démarrer le fonctionnement.

Ce procédé présente l'intérêt de ne pas avoir à faire un remplissage du MCP s/s à l'état liquide sur le site de stockage de l'énergie thermique. En effet, c'est une opération compliquée et coûteuse car il faut à chaque fois amener un four de fusion, faire fondre le MCP s/s dans le four situé non loin de l'enceinte 1, puis transférer le liquide dans des tuyauteries tracées jusqu'à l'enceinte et répéter cela pour chaque enceinte.

### Exemple 1 Procédé de formation du pentaérythritol

Les réactifs sont mélangés (21) pour former une suspension de para formaldéhyde.

On ajoute de la chaux vive (12). Préférentiellement, la température est contrôlée pour monter à 50°C en 30 minutes, maximum 55°C. Le mélange prend une couleur légèrement jaune. Une fois l'addition terminée, une agitation peut être poursuivie pendant trois heures. Le mélange est filtre (13) par gravité. De l'acide chlorhydrique dilué (14) est ajouté pour donner une réaction acide. De la norite est également ajoutée. Après cinq minutes pouvant être sous agitation, la solution est filtrée (15).

La liqueur est chauffée par exemple sur un bain de vapeur à la pression atmosphérique et on filtre sous pompe à chaud. Les cristaux qui restent sur le filtre sont lavé par aspiration (17) au travers de la vapeur humide (16). Le filtrat est laissé au repos au froid pendant une nuit et la première récolte de cristaux est obtenue par filtration. Plusieurs récoltes successives peuvent être effectuées.

### REFERENCES

- 1.: Enceinte
- 2.: MCP s/s
- 3.: Echangeur thermique
- 4.: Entrée fluide caloporteur
- 5.: Sortie fluide caloporteur
- 6.: Conduit d'alimentation
- 7.: Dispositif de soutirage
- 8.: Tube
- 9.: Ailette
- 11.: Mélange formaldéhyde + Acétaldéhyde + eau
- 12.: Ajout de Chaux vive
- 13.: Filtration après 3h
- 14.: Ajout d'acide Chlorhydrique + norite
- 15.: Filtration après 5 min
- 16.: Evaporation + Filtration à haute température
- 17.: Concentrations/ réfrigérations successives
- 18.: Ajout d'acide Chlorhydrique + eau
- 19.: Recristallisation
- 20.: Pentaérythritol
- 21.: Mélange des réactifs
- 22.: Filtration
- 23.: Cristallisation

## Revendications

1. Procédé de réalisation d'un dispositif de stockage d'énergie thermique par au moins un matériau à changement de phase solide/solide (2) comprenant au moins un matériau à changement de phase solide/solide (2) et un échangeur thermique (3), à fluide caloporteur pour stocker et extraire de la chaleur dudit matériau à changement de phase solide/solide (2), **caractérisé en ce que** le dispositif de stockage d'énergie comprend une enceinte (1) de stockage d'énergie thermique contenant le matériau à changement de phase solide/solide et **en ce que** l'échangeur thermique plonge dans ladite enceinte (1) et **en ce qu'**au moins une étape de formation du au moins un matériau à changement de phase solide/solide (2) est effectuée à l'intérieur de l'enceinte (1) de stockage, la au moins une étape de formation comprend au moins une étape de cristallisation (23).

2. Procédé selon la revendication précédente dans lequel la au moins une étape de formation comprend une étape de concentration (17) effectuée à l'intérieur de l'enceinte (1) de stockage.

3. Procédé selon l'une quelconque des revendications précédentes dans lequel la au moins une étape de formation comprend une étape de filtration (22) effectuée dans l'enceinte (1) de stockage.

4. Procédé selon l'une quelconque des revendications précédentes dans lequel la au moins une étape de formation comprend une étape de mélange des réactifs (21) effectuée dans l'enceinte (1) de stockage.

5. Procédé selon l'une quelconque des revendications précédentes dans lequel on introduit des réactifs de la formation du au moins un matériau à changement de phase solide/solide (2) dans l'enceinte (1) par au moins un conduit d'alimentation (6).

6. Procédé selon l'une quelconque des revendications précédentes dans lequel on extrait des résidus liquides issus de la formation du au moins un matériau à changement de phase de l'enceinte (1) par au moins un dispositif de soutirage (7).

7. Procédé selon l'une quelconque des revendications précédentes dans lequel l'échangeur thermique (3) à fluide caloporteur est utilisé pour contrôler la température à l'intérieure de l'enceinte (1) lors de la formation du au moins un matériau à changement de phase solide/solide (2).

8. Procédé selon la revendication précédente dans lequel l'échangeur thermique (3) est configuré pour contrôler la cristallisation du matériau à changement de phase solide/solide (2) à l'intérieur de l'enceinte (1).

9. Procédé selon l'une quelconque des revendications précédentes dans lequel le au moins un matériau à changement de phase solide/solide (2) est solubilisé dans un solvant puis introduit dans l'enceinte (1) de stockage puis au moins une étape de cristallisation (23) du matériau à changement de phase solide/solide (2) est effectuée à l'intérieur de l'enceinte (1).

10. Procédé selon l'une quelconque des revendications comprenant une étape préalable de recouvrement des parois métalliques intérieures de l'enceinte (1) par un matériau de revêtement destiné à éviter le contact entre le au moins un matériau à changement de phase solide/solide (2) et les parois métalliques de l'enceinte (1).

11. Procédé selon l'une quelconque des revendications comprenant une étape de dopage du au moins un matériau à changement de phase solide/solide (2) effectuée dans l'enceinte (1).

12. Procédé selon l'une quelconque des revendications dans lequel le au moins un matériau à changement de phase solide/solide (2) est le pentaérythritol.

13. Procédé de réalisation d'une installation de stockage d'énergie thermique sur un site d'exploitation **caractérisé par le fait qu'**il comprend :
- la réalisation d'un dispositif de stockage d'énergie thermique selon le procédé d'une quelconque des revendications 1 à 12.
- le transport sur un site d'exploitation du dispositif réalisé dont l'enceinte (1) est remplie de matériau à changement de phase solide/solide (2) ;
- le raccordement de l'échangeur (3) du dispositif au réseau fluidique pour démarrer le stockage d'énergie thermique.

14. Dispositif de stockage d'énergie thermique réalisé par le procédé selon l'une quelconque des revendications 1 à 12 comprenant une enceinte (1) de stockage d'énergie thermique contenant au moins un matériau à changement de phase solide/solide (2) et un échangeur thermique (3) à fluide caloporteur disposé au moins partiellement dans l'enceinte (1) **caractérisé par le fait qu'**il comprend un dispositif de régulation de la température du fluide caloporteur de sorte à être configuré pour :
- dans une configuration de formation du au moins un matériau à changement de phase solide/solide (2), contrôler la température du fluide caloporteur afin de provoquer la cristallisation du matériau à changement de phase solide/solide (2) ;
- dans une configuration d'utilisation, contrôler la température du fluide caloporteur afin d'amener et d'extraire de la chaleur du matériau à changement de phase solide/solide (2) préalablement formé.

15. Utilisation d'un dispositif de stockage d'énergie thermique réalisé par le procédé selon l'une quelconque des revendications 1 à 12 comprenant une enceinte (1) de stockage d'énergie thermique contenant au moins un matériau à changement de phase solide/solide (2) et un échangeur thermique (3) à fluide caloporteur disposé au moins partiellement dans l'enceinte (1)
**caractérisée par le fait qu'**elle comprend
- une étape d'utilisation de l'échangeur (3) pour contrôler la cristallisation du matériau à changement de phase solide/solide dans l'enceinte (1) ;
- une étape d'utilisation de l'échangeur pour apporter de la chaleur du au moins un matériau à changement de phase solide/solide (2) formé ou pour extraire de la chaleur du au moins un matériau à changement de phase solide/solide (2) formé.

## Patentansprüche

1. Verfahren zur Herstellung einer Vorrichtung zum Speichern von Wärmeenergie anhand mindestens eines Fest-/Festphasenübergangsmaterials (2), das mindestens ein Fest-/Festphasenübergangsmaterial (2) und einen Wärmeaustauscher (3) umfasst, mit Kühlmittel zum Speichern und Extrahieren von Wärme des Fest-/Festphasenübergangsmaterials (2), **dadurch gekennzeichnet, dass** die Vorrichtung zum Speichern von Energie einen Einschluss (1) zum Speichern von Wärmeenergie umfasst, der das Fest-/Festphasenübergangsmaterial (2) enthält, und dass der Wärmeaustauscher in den Einschluss (1) taucht, und dass dieser mindestens eine Bildungsschritt des mindestens einen Fest-/Festphasenübergangsmaterials (2) im Inneren des Speichereinschlusses (1) ausgeführt wird, wobei der mindestens eine Bildungsschritt mindestens eine Kristallisationsetappe (23) umfasst.

2. Verfahren nach dem vorhergehenden Anspruch, wobei der mindestens eine Bildungsschritt einen Schritt des Konzentrierens (17) umfasst, der im Inneren des Speichereinschlusses (1) ausgeführt wird.

3. Verfahren nach einem der vorhergehenden Ansprüche, wobei der mindestens eine Bildungsschritt einen Filterschritt (22) umfasst, der in dem Speichereinschluss (1) ausgeführt wird.

4. Verfahren nach einem der vorhergehenden Ansprüche, wobei der mindestens eine Bildungsschritt einen Schritt des Mischens der Reagenzien (21) umfasst, der in dem Speichereinschluss (1) ausgeführt wird.

5. Verfahren nach einem der vorhergehenden Ansprüche, wobei man Reagenzien der Bildung des mindestens einen Fest-/Festphasenübergangsmaterials (2) in den Einschluss (1) durch mindestens eine Versorgungsleitung (6) einführt.

6. Verfahren nach einem der vorhergehenden Ansprüche, bei dem man flüssige Reste, die aus der Bildung des mindestens einen Phasenwechselmaterials des Einschlusses (1) hervorgehen, durch mindestens eine Zapfvorrichtung (7) extrahiert.

7. Verfahren nach einem der vorhergehenden Ansprüche, wobei der Wärmeaustauscher (3) mit Kühlmittel verwendet wird, um die Temperatur im Inneren des Einschlusses (1) bei dem Bilden des mindestens einen Fest-/Festphasenübergangsmaterials (2) zu steuern.

8. Verfahren nach dem vorhergehenden Anspruch, wobei der Wärmeaustauscher (3) konfiguriert ist, um das Kristallisieren des Fest-/Festphasenübergangsmaterials (2) im Inneren des Einschlusses (1) zu steuern.

9. Verfahren nach einem der vorhergehenden Ansprüche, wobei das mindestens eine Fest-/Festphasenübergangsmaterial (2) in einem Lösemittel aufgelöst und dann in den Speichereinschluss (1) eingeführt wird, wonach mindestens ein Kristallisationsschritt (23) des Fest-/Festphasenübergangsmaterials (2) im Inneren des Einschlusses (1) ausgeführt wird.

10. Verfahren nach einem der Ansprüche, das einen vorausgehenden Schritt des Abdeckens der metallischen Innenwände des Einschlusses (1) durch ein Beschichtungsmaterial umfasst, das dazu bestimmt ist, die Berührung zwischen dem mindestens einen Fest-/Festphasenübergangsmaterial (2) und den metallischen Wänden des Einschlusses (1) zu vermeiden.

11. Verfahren nach einem der Ansprüche, das einen Schritt des Dotierens des mindestens einen Fest-/Festphasenübergangsmaterials (2), der in dem Einschluss (1) ausgeführt wird, umfasst.

12. Verfahren nach einem der Ansprüche, wobei das mindestens eine Fest-/Festphasenübergangsmaterial (2) Pentaerythriol ist.

13. Verfahren zum Herstellen einer Wärmeenergie-Speicheranlage auf einem Betriebsstandort, **dadurch gekennzeichnet, dass** es Folgendes umfasst:
- die Herstellung einer Wärmeenergie-Speichervorrichtung nach dem Verfahren eines der Ansprüche 1 bis 12.
- den Transport auf den Betriebsstandort der hergestellten Vorrichtung, deren Einschluss (1) mit Fest-/Festphasenübergangsmaterial (2) gefüllt ist,
- das Anschließen des Wärmeaustauschers (3) der Vorrichtung an den Fluidkreislauf, um das Speichern von Wärmeenergie zu beginnen.

14. Wärmeenergie-Speichervorrichtung, die durch das Verfahren nach einem der Ansprüche 1 bis 12 ausgeführt wird, die einen Einschluss (1) zum Speichern von Wärmeenergie umfasst, der mindestens ein Fest-/Festphasenübergangsmaterial (2) enthält, und einen Wärmeaustauscher (3) mit Kühlmittel, der mindestens teilweise in dem Einschluss (1) angeordnet ist, **dadurch gekennzeichnet, dass** sie eine Vorrichtung zum Regulieren der Temperatur des Kühlmittels derart umfasst, dass sie konfiguriert ist, um:
- in einer Konfiguration zum Bilden des mindestens einen Fest-/Festphasenübergangsmaterials (2) die Temperatur des Kühlmittels zu steuern, um die Kristallisation des Fest-/Festphasenübergangsmaterials (2) hervorzurufen,
- in einer Gebrauchskonfiguration die Temperatur des Kühlmittels zu steuern, um Wärme des Fest-/Festphasenübergangsmaterials (2), das vorab gebildet wurde, zuzuführen und zu extrahieren.

15. Einsatz einer Wärmeenergie-Speichervorrichtung, die durch das Verfahren nach einem der Ansprüche 1 bis 12 hergestellt ist, die einen Einschluss (1) zum Speichern von Wärmeenergie umfasst, der mindestens ein Fest-/Festphasenübergangsmaterial (2) enthält, und einen Wärmeaustauscher (3) mit Kühlmittel, der mindestens teilweise in dem Einschluss (1) angeordnet ist,
**dadurch gekennzeichnet, dass** sie
- einen Schritt des Verwendens des Wärmeaustauschers (3) zum Steuern der Kristallisation des Fest-/Festphasenübergangsmaterials in dem Einschluss (1),
- einen Schritt des Verwendens des Wärmeaustauschers umfasst, um Wärme des mindestens einen Fest-/Festphasenübergangsmaterials (2), das gebildet wird, zuzuführen, oder um Wärme aus dem mindestens einen gebildeten Fest-/Festphasenübergangsmaterial (2) zu extrahieren.

## Claims

1. A method for producing a thermal energy storage device by means of at least one solid/solid phase change material (2) comprising at least one solid/solid phase change material (2) and a heat exchanger (3), with heat-transfer fluid for storing and extracting the heat of said solid/solid phase change material (2), **characterised in that** energy storage device comprises a thermal energy storage chamber (1) containing the solid/solid phase change material and **in that** the heat exchanger immerses in said chamber (1), and **in that** at least one step of forming the at least one solid/solid phase change material (2) is performed inside the storage chamber (1), the at least one formation step comprising at least one crystallisation step (23).

2. A method according to the previous claim, wherein the at least one formation step comprises a concentration step (17) performed inside the storage chamber (1).

3. A method according to any one of preceding claims, wherein the at least one formation step comprises a filtration step (22) performed in the storage chamber (1).

4. A method according to any one of the preceding claims, wherein the at least one formation step comprises a step of mixing the reagents (21) performed in the storage chamber (1).

5. A method according to any one of the preceding claims, wherein the reagents for the formation of the at least one solid/solid phase change material (2) are introduced into the chamber (1) through at least one supply pipe (6).

6. A method according to any one of the preceding claims, wherein liquid residues issuing from the formation of the at least one phase change material are extracted from the chamber (1) through at least one takeoff device (7).

7. A method according to any one of the preceding claims, wherein the heat exchanger (3) with heat-transfer fluid is used for controlling the temperature inside the chamber (1) during the formation of at least one solid/solid phase change material (2).

8. A method according to the preceding claim, wherein the heat exchanger (3) is configured so as to control the crystallisation of the solid/solid phase change material (2) inside the chamber (1).

9. A method according to any one of the preceding claims, wherein the at least one solid/solid phase change material (2) is solubilised in a solvent and then introduced into the storage chamber (1), and then at least one step of crystallisation (23) of the solid/solid phase change material (2) is performed inside the chamber (1).

10. A method according to any one of the claims, comprising a prior step of covering the interior metal walls of the chamber (1) with a cladding material intended to prevent contact between the at least one solid/solid phase change material (2) and the metal walls of the chamber (1).

11. A method according to any one of the claims, comprising a step of doping the at least one solid/solid phase change material (2) carried out in the chamber (1).

12. A method according to any one of the claims, wherein the at least one solid/solid phase change material (2) is pentaerythritol.

13. A method for producing a thermal energy storage installation on an operating site, **characterised by** the fact that it comprises:
- the production of a thermal energy storage device according to the method of any one of claims 1 to 12;
- transportation onto the operating site of the device produced, the chamber (1) of which is filled with solid/solid phase change material (2);
- connection of the heat exchanger (3) of the device to the fluid system for starting the thermal energy storage.

14. A thermal energy storage device produced by the method according to any one of claims 1 to 12, comprising a thermal energy storage chamber (1) containing at least one solid/solid phase change material (2) and a heat exchanger (3) of the heat-transfer fluid type at least partially disposed in the chamber (1), **characterised by** the fact that it comprises a device for regulating the temperature of the heat-transfer fluid so as to be configured in order:
- in a configuration of formation of the at least one solid/solid phase change material (2), to control the temperature of the heat-transfer fluid in order to cause crystallisation of the solid/solid phase change material (2);
- in a use configuration, to control the temperature of the heat-transfer fluid in order to bring and extract heat to and from the solid/solid phase change material (2) previously formed.

15. Use of a thermal energy storage device produced by the method according to any one of claims 1 to 12, comprising a thermal energy storage chamber (1) containing at least one solid/solid phase change material (2) and a heat exchanger (3) of the heat-transfer fluid type at least partially disposed in the chamber (1),
**characterised by** the fact that it comprises
- a step of use of the heat exchanger (3) for controlling the crystallisation of the solid/solid phase change material in the chamber (1),
- a step of using the exchanger for contributing heat to the at least one solid/solid phase change material (2) formed or for extracting heat from the at least one solid/solid phase change material (2) formed.
